# EUROPÄISCHE PATENTSCHRIFT

(11) **EP 3 578 629 B1**
(45) Veröffentlichungstag und Bekanntmachung des Hinweises auf die Patenterteilung: **07.06.2023**
(21) Anmeldenummer: 18176631.2
(22) Anmeldetag: 07.06.2018
(51) Int. Cl.: C11D 3/40, C11D 11/00, C11D 3/43, C09B 67/44

(54) **VERFAHREN ZUR HERSTELLUNG EINES FLÜSSIGEN WASCH- ODER REINIGUNGSMITTELS MIT EINER KONSERVIERUNGSMITTELFREIEN FARBSTOFFLÖSUNG**
METHOD FOR THE PREPARATION OF A LIQUID DETERGENT COMPOSITION COMPRISING A PRESERVATIVE-FREE DYE SOLUTION
PROCÉDÉ DE FABRICATION D'UN AGENT DE LAVAGE OU DE NETTOYAGE LIQUIDE CONTENANT UNE SOLUTION DE SUBSTANCE COLORANTE SANS AGENT CONSERVATEUR

(43) Veröffentlichungstag der Anmeldung: 11.12.2019
(73) Patentinhaber: Henkel AG & Co. KGaA, 40589 Düsseldorf (DE)
(72) Erfinder: Sunder, Matthias, 40593 Düsseldorf (DE); Trebbe, Uwe, 40219 Düsseldorf (DE); Hammelstein, Stefan, 40591 Düsseldorf (DE); Blank, Volker, 51375 Leverkusen (DE); Holderbaum, Thomas, 40723 Hilden (DE); Tollkoetter, Alexander, 40721 Hilden (DE); Siepler, Niklas, 40589 Düsseldorf (DE); Boesemann, Gerd, 40595 Düsseldorf (DE)

(56) Entgegenhaltungen:
- DE-A1-102005 024 496
- US-A- 4 500 321
- US-A1- 2007 191 250
- US-A1- 2012 090 102
- US-A1- 2016 075 977

## Beschreibung

Die vorliegende Erfindung betrifft ein kontinuierliches Verfahren zur Herstellung eines flüssigen Wasch- oder Reinigungsmittels, welches wenigstens ein Tensid sowie wenigstens einen Farbstoff umfasst. Dabei ist die im erfindungsgemäßen Verfahren eingesetzte Farbstofflösung frei von Konservierungsmitteln. Ebenso betrifft die vorliegende Erfindung Wasch- oder Reinigungsmittel, die durch das erfindungsgemäße Verfahren erhalten werden.

Wasch- und Reinigungsmittel werden zunehmend in kontinuierlichen Verfahren hergestellt. Um einen bestimmten optischen Eindruck zu erhalten, wird üblicherweise auch eine Farbstofflösung in den Herstellungsverfahren dosiert. Um eine Verkeimung dieser Farbstofflösung zu verhindern, muss diese mikrobiologisch stabilisiert werden.

Konservierungsmittel stehen jedoch mehr und mehr in Kritik und sind teilweise zwischenzeitlich verboten. Demnach besteht der Bedarf an Farbstofflösung, die ohne Konservierungsmittel auskommen, also bei denen eine mikrobiologische Konservierung nicht notwendig ist.

Werden nicht konservierte wässrige Farbstofflösungen eingesetzt, um Konservierungsmittel zu vermeiden, so ist aufgrund der Produktionshygiene ein regelmäßiger Austausch der Lösung sowie regelmäßig eine Hygienisierung der Dosierstrecke mit Heißdampf vorzusehen. Dies führt zum einen zu Produktionsstillständen. Weiterhin fallen Abwässer an, die entsorgt werden müssen, sodass dies nicht nur aus produktionstechnischer Sicht, sondern auch aus Umweltaspekten nicht erwünscht ist.

Es besteht daher Bedarf an einem kontinuierlichen Verfahren zur Herstellung eines flüssigen Wasch- oder Reinigungsmittels, bei welchem konservierungsmittelfreie Farbstofflösungen eingesetzt werden können beziehungsweise es besteht Bedarf einer Bereitstellung entsprechend konservierungsmittelfreier Farbstofflösungen. Diese müssen gegenüber den bekannten wässrigen Farbstofflösungen so ausgestaltet sein, dass eine regelmäßige Hygienisierung der Dosierstrecke in der Anlage nicht notwendig ist oder zumindest deutlich seltener durchgeführt werden muss. Über-Überraschenderweise hat sich gezeigt, dass die der vorliegenden Erfindung zu Grunde liegende Aufgabe, dadurch gelöst werden kann, dass die Farbstofflösung in einem nichtwässrigen Stoffsystem bereitgestellt wird.

Farbstoff-haltige Waschmittel werden in den US-amerikanischen Patentanmeldungen US 2007/0191250 A1, US 2012/0090102 A1 und US 2016/0075977 A1 beschrieben.

Die deutsche Patentanmeldung DE 10 2005 024 496 A1 beschreibt ein Verfahren zur Herstellung homogener Farbstofflösungen, in dessen Verlauf ein Farbstoff und ein Lösungsmittel mittels getrennter Düsen in eine Wirbelkammer eingespritzt und dort vermischt werden.

In einer ersten Ausführungsform betrifft die vorliegende Erfindung daher ein kontinuierliches Verfahren zur Herstellung eines flüssigen Wasch- oder Reinigungsmittels umfassend wenigstens ein Tensid sowie wenigstens einen Farbstoff, wobei das Verfahren die folgenden Schritte umfasst:
a) Bereitstellen einer konservierungsmittelfreien Farbstofflösung, wobei der Farbstoff zunächst in Wasser gelöst wird und diese Vormischung anschließend in wenigstens einem nichtwässrigen, organischen Lösungsmittel verdünnt wird, wobei der Gehalt des organischen Lösungsmittels wenigstens 70 Gew.-%, bezogen auf das Gesamtgewicht der Farbstofflösung, beträgt,
b) Dosieren der so erhaltenen Farbstofflösung in einen tensidhaltigen Flüssigkeitsstrom.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist.

Alle Prozentangaben sind, sofern nicht anders angegeben, Gew.-% und beziehen sich jeweils auf die genannten Zusammensetzungen. Numerische Bereiche, die in dem Format "von X bis Y" angegeben sind, schließen die genannten Werte X und Y ein. Wenn mehrere bevorzugte numerische Bereiche in diesem Format angegeben sind, so ist es selbstverständlich, dass alle Bereiche, die durch die Kombination der verschiedenen Endpunkte entstehen, ebenfalls erfasst sind.

"Mindestens ein" oder "wenigstens ein", wie hierin verwendet, bezieht sich auch ein oder mehr, beispielsweise 1, 2, 3, 4, 5, 6, 7, 8, 9 oder mehr. Insbesondere bezieht sich diese Angabe auf die Art des Mittels/der Verbindung und nicht die absolute Zahl der Moleküle.

"Etwa" oder "ungefähr", wie hierin im Zusammenhang mit einem Zahlenwert verwendet, bedeutet den Zahlenwert ± 10 %, vorzugsweise ± 5 %.

Überraschenderweise hat sich gezeigt, dass die sich aus dem Stand der Technik ergebenden Probleme dadurch gelöst werden, dass die Farbstofflösung mit einem nichtwässrigen Stoffsystem hergestellt wird. Dabei wird der Farbstoff zunächst in einer kleinen Menge Wasser gelöst, um diesen vollständig zu lösen. Die Konzentration des Farbstoffs in der wässrigen Vormischung entspricht vorzugsweise mindestens dem 400-fachen, bevorzugt mindestens dem 600-fachen, besonders bevorzugt dem 800-fachen bis 5000-fachen und insbesondere dem 900-fachen bis 2000-fachen der im Endprodukt gewünschten Farbstoffzielkonzentration.

Diese so erhaltene Vormischung wird dann mit einem organischen, mit Wasser mischbaren Lösungsmittel verdünnt. Diese Verdünnung ist notwendig, um eine mit hinreichender Genauigkeit kontinuierlich dosierbare Lösung zu erhalten.

Die so erhaltende Farbstofflösung, welche im Wesentlichen organische Lösungsmittel als Lösungsmittel aufweist, wird dann in einen tensidhaltigen Flüssigkeitsstrom dosiert. Je nach Art des in dem Flüssigkeitsstroms weiter enthaltenen Komponenten kann es notwendig sein, dass eine Durchmischung der Farbstofflösung mit dem tensidhaltigen Flüssigkeitsstrom mittels eines Mischers notwendig ist. Der Mischer kann dabei ein dynamischer oder ein statischer Mischer sein.

Überraschenderweise hat sich gezeigt, dass ein Gehalt an organischem Lösungsmittel von mindestens 70 Gew.-% in der Farbstofflösung dafür sorgt, dass keine mikrobiologische Konservierung notwendig ist. Bevorzugt beträgt der Gehalt eines organischen Lösungsmittels mindestens 80 Gew.-% und bevorzugt mindestens 90 Gew.-%.

Der Farbstoff ist ein üblicher Farbstoff, der für unterschiedliche Wasch- oder Reinigungsmittel eingesetzt werden kann. Vorzugsweise ist der Farbstoff ausgewählt aus Acid Red 18 (CI 16255), Acid Red 26, Acid Red 27, Acid Red 33, Acid Red 51, Acid Red 87, Acid Red 88, Acid Red 92, Acid Red 95, Acid Red 249 (CI 18134), Acid Red 52 (CI 45100), Acid Violet 126, Acid Violet 48, Acid Violet 54, Acid Yellow 1, Acid Yellow 3 (CI 47005), Acid Yellow 11, Acid Yellow 23 (CI 19140), Acid Yellow 3, Direct Blue 199 (CI 74190), Direct Yellow 28 (CI 19555), Food Blue 2 (CI 42090), Food Blue 5:2 (CI 42051 :2), Food Red 7(01 16255), Food Yellow 13 (CI 47005), Food Yellow 3 (CI 15985), Food Yellow 4 (CI 19140), Reactive Green 12, Solvent Green 7 (CI 59040).

Besonders bevorzugte Farbstoffe sind wasserlösliche Säurefarbstoffe, beispielsweise Food Yellow 13 (Acid Yellow 3, CI 47005), Food Yellow 4 (Acid Yellow 23, CI 19140), Food Red 7 (Acid Red 18, CI 16255), Food Blue 2 (Acid Blue 9, CI 42090), Food Blue 5 (Acid Blue 3, CI 42051), Acid Red 249 (CI 18134), Acid Red 52 (CI 45100), Acid Violet 126, Acid Violet48, Acid Blue 80(01 61585), Acid Blue 182, Acid Blue 182, Acid Green 25 (CI 61570), Acid Green 81.

Ebenso bevorzugt eingesetzt werden auch wasserlösliche Direktfarbstoffe, beispielsweise Direct Yellow 28 (CI 19555), Direct Blue 199 (CI 74190) und wasserlösliche Reaktiv-Farbstoffe, beispielsweise Reactive Green 12, sowie die Farbstoffe Food Yellow 3 (CI 15985), Acid Yellow 184.

Ebenso bevorzugt eingesetzt werden wässrige Dispersionen folgender Pigment-Farbstoffe, Pigment Black 7 (CI 77266), Pigment Blue 15 (CI 74160), Pigment Blue 15:1 (CI 74160), Pigment Blue 15:3 (CI 74160), Pigment Green 7 (CI 74260), Pigment Orange 5, Pigment Red 112 (CI 12370), Pigment Red 112 (CI 12370), Pigment Red 122 (CI 73915), Pigment Red 179 (CI 71130), Pigment Red 184 (CI 12487), Pigment Red 188 (CI 12467), Pigment Red 4 (CI 12085), Pigment Red 5 (CI 12490), Pigment Red 9, Pigment Violet 23 (CI 51319), Pigment Yellow 1 (CI 28 11680), Pigment Yellow 13 (CI 21100), Pigment Yellow 154, Pigment Yellow 3 (CI 11710), Pigment Yellow 74, Pigment Yellow 83 (CI 21108), Pigment Yellow 97. In bevorzugten Ausführungsformen werden folgende Pigmentfarbstoffe in Form von Dispersionen eingesetzt: Pigment Yellow 1 (CI 11680), Pigment Yellow 3 (CI 11710), Pigment Red 112 (CI 12370), Pigment Red 5 (CI 12490), Pigment Red 181 (CI 73360), Pigment Violet 23 (CI 51319), Pigment Blue 15:1 (CI 74160), Pigment Green 7 (CI 74260), Pigment Black 7 (CI 77266).

In ebenfalls bevorzugten Ausführungsformen werden wasserlösliche Polymerfarbstoffe, beispielsweise Liquitint, Liquitint Blue HP, Liquitint Blue MC, Liquitint Blue 65, Liquitint Cyan 15, Liquitint Patent Blue,Liquitint Violet 129, Liquitint Royal Blue, Liquitint Experimental Yellow 8949-43, Liquitint Green HMC, Liquitint Yellow LP, Liquitint Yellow II und Mischungen daraus eingesetzt.

Besonders bevorzugt ist der Einsatz wasserlöslicher Polymerfarbstoffe.

Zur Gruppe der ganz besonders bevorzugten Farbstoffe zählen Acid Blue 3, Acid Yellow 23, Acid Red 33, Acid Violet 126, Liquitint Yellow LP, Liquitint Cyan 15, Liquitint Blue HP und Liquitint Blue MC.

Das erfindungsgemäße Verfahren umfasst weiterhin, dass die Farbstofflösung in einem tensidhaltigen Flüssigkeitsstrom dosiert wird. Das erhaltende flüssige Wasch- oder Reinigungsmittel umfasst somit wenigstens ein Tensid. Das wenigstens eine Tensid kann dabei ausgewählt sein aus anionischen Tensiden, nichtionischen Tensiden, kationischen Tensiden und zwitterionischen Tensiden. Bevorzugt umfasst das Wasch- oder Reinigungsmittel wenigstens ein anionisches und/oder wenigstens ein nichtionisches Tensid.

Besonders gut eignen sich Wasch- oder Reinigungsmittel, die wenigstens ein Alkylbenzolsulfonat als Aniontensid (anionisches Tensid) aufweisen. Besonders bevorzugt ist das wenigstens eine Alkylbenzolsulfonat ein lineares oder verzweigtes C6-19-Alkylbenzolsulfonat, vorzugsweise ein lineares C9-13-Alkylbenzolsulfonat.

Als anionische Tenside werden beispielsweise solche vom Typ der Sulfonate und Sulfate eingesetzt. Als Tenside vom Sulfonat-Typ kommen dabei vorzugsweise C9-13-Alkylbenzolsulfonate, Olefinsulfonate, d.h. Gemische aus Alken und Hydroxyalkansulfonaten sowie Disulfonaten, wie man sie beispielsweise aus C12-18-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C12-18- Alkanen beispielsweise durch Sulfochlorierung oder Sulfoxidation mit anschließender Hydrolyse beziehungsweise Neutralisation gewonnen werden. Ebenso sind auch die Ester von α-Sulfofettsäuren (Estersulfonate), z.B. die α-sulfonierten Methylester der hydrierten Kokos-, Palmkern- oder Talgfettsäuren geeignet.

Geeignete Alkylbenzolsulfonate sind vorzugsweise ausgewählt aus linearen oder verzweigten Alkylbenzolsulfonaten der Formel 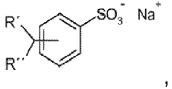 in der R' und R" unabhängig voneinander H oder Alkyl sind und zusammen 6 bis 19, vorzugsweise 7 bis 15 und insbesondere 9 bis 13 C-Atome enthalten. Ein ganz besonders bevorzugter Vertreter ist Natriumdodecylbenzylsulfonat.

Als Alk(en)ylsulfate werden die Alkali- und insbesondere die Natriumsalze der Schwefelsäurehalbester der C12-C18-Fettalkohole, beispielsweise aus Kokosfettalkohol, Talgfettalkohol, Lauryl-, Myristyl-, Cetyl- oder Stearylalkohol oder der C10-C20-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C12-C16-Alkylsulfate und C12-C15-Alkylsulfate sowie C14-C15- Alkylsulfate bevorzugt.

Auch die Schwefelsäuremonoester der mit 1 bis 6 Mol Ethylenoxid ethoxylierten geradkettigen oder verzweigten C7-21-Alkohole, wie 2-Methyl-verzweigte C9-11-Alkohole mit im Durchschnitt 3,5 Mol Ethylenoxid (EO) oder C12-18-Fettalkohole mit 1 bis 4 EO, sind geeignet. Geeignete Alkylethersulfate sind beispielsweise Verbindungen der Formel A-1

R1-O-(AO)n-SO3- X+ (A-1)

In dieser Formel steht R1 für einen linearen oder verzweigten, substituierten oder unsubstituierten Alkylrest, vorzugsweise für einen linearen, unsubstituierten Alkylrest, besonders bevorzugt für einen Fettalkoholrest. Bevorzugte Reste R sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R1 sind abgeleitet von C12-C18-Fettalkoholen, beispielsweise von Kokosfettalkohol, Talgfettalkohol, Lauryl-, Myristyl-, Cetyl- oder Stearylalkohol oder von C10-C20-Oxoalkoholen. AO steht für eine Ethylenoxid- (EO) oder Propylenoxid- (PO) Gruppierung, vorzugsweise für eine Ethylenoxidgruppierung. Der Index n steht für eine ganze Zahl von 1 bis 50, vorzugsweise von 1 bis 20 und insbesondere von 2 bis 10. Ganz besonders bevorzugt steht n für die Zahlen 2, 3, 4, 5, 6, 7 oder 8. X steht für ein einwertiges Kation oder den n-ten Teil eines n-wertigen Kations, bevorzugt sind dabei die Alkalimetallionen und darunter Na+ oder K+, wobei Na+ äußerst bevorzugt ist. Weitere Kationen X+ können ausgewählt sein aus NH4+, ½ Mg2+, ½ Ca2+, ½ Mn2+, und deren Mischungen.

In verschiedenen Ausführungsformen kann das Alkylethersulfat ausgewählt sein aus Fettalkoholethersulfaten der Formel A-2. 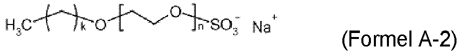 mit k = 11 bis 19, n = 2, 3, 4, 5, 6, 7 oder 8.

Ganz besonders bevorzugte Vertreter sind Na-C12-14 Fettalkoholethersulfate mit 2 EO (k = 11-13, n = 2 in Formel A-2). Der angegebene Ethoxylierungsgrad stellt einen statistischen Mittelwert dar, der für ein spezielles Produkt eine ganze oder eine gebrochene Zahl sein kann. Die angegebenen Alkoxylierungsgrade stellen statistische Mittelwerte dar, die für ein spezielles Produkt eine ganze oder eine gebrochene Zahl sein können. Bevorzugte Alkoxylate/Ethoxylate weisen eine eingeengte Homologenverteilung auf (narrow range ethoxylates, NRE).

Im Sinne der vorliegenden Erfindung werden unter dem Begriff "anionische Tenside" keine Seifen verstanden. Die Wasch- oder Reinigungsmittel können zwar Seifen umfassen diese werden jedoch im Sinne der vorliegenden Erfindung nicht den anionischen Tensiden zugerechnet.

Dementsprechend kommen Seifen als zusätzliche Bestandteile der Wasch- oder Reinigungsmittel in Betracht. Geeignet sind gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, z.B. Kokos-, Palmkern- oder Talgfettsäuren, abgeleitete Seifengemische. Die anionischen Tenside wie auch Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside und Seifen in Form ihrer Natrium-, Kalium- oder Magnesiumsalze, insbesondere in Form der Natriumsalze vor.

Bei der Auswahl der anionischen Tenside stehen der Formulierungsfreiheit keine einzuhaltenden Rahmenbedingungen im Weg. Es ist lediglich zu berücksichtigen, dass Seifen nicht zu den anionischen Tensiden gerechnet werden. Bevorzugt einzusetzende anionische Tenside sind dabei die Alkylbenzolsulfonate und Fettalkoholsulfate, insbesondere die Alkylbenzolsulfonate.

Umfasst das Wasch- oder Reinigungsmittel eine oder mehrere Seifen, so beträgt der Anteil an Seife vorzugsweise 0,1 Gew.-% bis 1 Gew.-%, insbesondere von 0,1 Gew.-% bis 0,7 oder 0,2 Gew.-% bis 0,5 Gew.-%, bezogen auf das Gesamtgewicht des Wasch- oder Reinigungsmittels. Alle im Zusammenhang mit den hierin beschriebenen Wasch- oder Reinigungsmitteln angegeben Mengenangaben beziehen sich, sofern nichts anderes angegeben ist, auf Gew.-% jeweils bezogen auf das Gesamtgewicht des Wasch- oder Reinigungsmittels. Des Weiteren beziehen sich derartige Mengenangaben, die sich auf mindestens einen Bestandteil beziehen, immer auf die Gesamtmenge dieser Art von Bestandteil, die im Mittel enthalten ist, sofern nicht explizit etwas anderes angegeben ist. Das heißt, dass sich derartige Mengenangaben, beispielsweise im Zusammenhang mit "mindestens einem anionischen Tensid", auf die Gesamtmenge von anionischen Tensiden die im Mittel enthalten ist, beziehen.

Die Angaben, die im Zusammenhang mit den Wasch- oder Reinigungsmitteln angegeben werden, gelten ebenfalls für die erfindungsgemäßen Verfahren.

Neben den beschriebenen anionischen Tensiden und kurzkettigen Alkylamidopropylbetainen können die Wasch- oder Reinigungsmittel weiterhin übliche Inhaltsstoffe von solchen Mitteln enthalten. Hier sind in erster Linie weitere Tenside, insbesondere nichtionische Tenside, Buildersubstanzen sowie Bleichmittel, Enzyme und andere Aktivstoffe zu nennen. Ganz allgemein kann das Wasch- oder Reinigungsmittel weitere Inhaltsstoffe enthalten, die die anwendungstechnischen und/oder ästhetischen Eigenschaften des Waschmittels weiter verbessern. Im Rahmen der vorliegenden Erfindung enthält das Wasch- oder Reinigungsmittel vorzugsweise zusätzlich einen oder mehrere Stoffe aus der Gruppe der Enzyme, Bleichmittel, Bleichaktivatoren, Komplexbildner, Gerüststoffe, Elektrolyte, nichtwässrigen Lösungsmittel, pH-Stellmittel, Parfüme, Parfümträger, Fluoreszenzmittel, optischen Aufheller, Farbstoffe, Speckles, Hydrotrope, Silikonöle, Antiredepositionsmittel, Vergrauungsinhibitoren, Einlaufverhinderer, Knitterschutzmittel, Farbübertragungsinhibitoren, antimikrobiellen Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, weichmachenden Komponenten sowie UV-Absorber. Im Falle, dass die Wasch- oder Reinigungsmittel wie hierin definiert keine Seife umfassen, können die Zusammensetzungen dennoch Speckles aufweisen, die Seifen-Anteile aufweisen. In diesem Fall weist die Zusammensetzung nur in den Speckles Seifen auf.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann beziehungsweise lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C12-14-Alkohole mit 3 EO oder 4 EO, C9-11-n-Alkohol mit 7 EO, C13-15-Alkohole mit 3 EO, 5 EO, 7 EO oder 8 EO, C 12-18- Alkohole mit 3 EO, 5 EO oder 7 EO und Mischungen aus diesen, wie Mischungen aus C12-14- Alkohol mit 3 EO und C12-18-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester.

Eine weitere Klasse von nichtionischen Tensiden, die vorteilhaft eingesetzt werden kann, sind die Alkylpolyglycoside (APG). Einsetzbare Alkylpolyglycoside genügen der allgemeinen Formel RO(G)z, in der R für einen linearen oder verzweigten, insbesondere in 2-Stellung methylverzweigten, gesättigten oder ungesättigten, aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Glycosidierungsgrad z liegt dabei zwischen 1,0 und 4,0, vorzugsweise zwischen 1,0 und 2,0 und insbesondere zwischen 1,1 und 1,4. Bevorzugt eingesetzt werden lineare Alkylpolyglycoside, also Alkylpolyglycoside, in denen der Polyglycosylrest ein Glucoserest und der Alkylrest ein n-Alkylrest ist.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Eine andere bedeutende Gruppe von Wasch- oder Reinigungsmittelinhaltsstoffen sind die Buildersubstanzen. Unter dieser Substanzklasse, werden sowohl organische als auch anorganische Gerüstsubstanzen verstanden. Es handelt sich dabei um Verbindungen, die sowohl eine Trägerfunktion in den Mitteln wahrnehmen können als auch bei der Anwendung als wasserenthärtende Substanz wirken.

Brauchbare organische Gerüstsubstanzen sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen. Auch die Säuren an sich können eingesetzt werden. Die Säuren besitzen neben ihrer Builderwirkung typischerweise auch die Eigenschaft einer Säuerungskomponente und dienen somit, wie beispielsweise in den Granulaten, auch zur Einstellung eines niedrigeren und milderen pH-Wertes von Wasch- oder Reinigungsmitteln. Insbesondere sind hierbei Citronensäure, Bernsteinsäure, Glutarsäure, Adipinsäure, Gluconsäure und beliebige Mischungen aus diesen zu nennen.

Als Builder sind weiter polymere Polycarboxylate geeignet, dies sind beispielsweise die Alkalimetallsalze der Polyacrylsäure oder der Polymethacrylsäure, beispielsweise solche mit einer relativen Molekülmasse von 500 bis 70000 g/mol. Diese Substanzklasse wurde im Detail bereits weiter oben beschrieben. Die (co-)polymeren Polycarboxylate können entweder als Pulver oder als wässrige Lösung eingesetzt werden. Der Gehalt der Mittel an (co-)polymeren Polycarboxylaten beträgt vorzugsweise 0,5 bis 20 Gew.-%, insbesondere 3 bis 10 Gew.-%.

Zur Verbesserung der Wasserlöslichkeit können die Polymere auch Allylsulfonsäuren, wie beispielsweise in der EP-B-0 727 448 Allyloxybenzolsulfonsäure und Methallylsulfonsäure, als Monomer enthalten. Insbesondere bevorzugt sind auch biologisch abbaubare Polymere aus mehr als zwei verschiedenen Monomereinheiten, beispielsweise solche, die gemäß der DE-A-43 00 772 als Monomere Salze der Acrylsäure und der Maleinsäure sowie Vinylalkohol beziehungsweise VinylalkoholDerivate oder gemäß der DE-C-42 21 381 als Monomere Salze der Acrylsäure und der 2- Alkylallylsulfonsäure sowie Zucker-Derivate enthalten. Weitere bevorzugte Copolymere sind solche, die in den deutschen Patentanmeldungen DE-A-43 03 320 und DE-A-44 17 734 beschrieben werden und als Monomere vorzugsweise Acrolein und Acrylsäure/Acrylsäuresalze beziehungsweise Acrolein und Vinylacetat aufweisen. Ebenso sind als weitere bevorzugte Buildersubstanzen polymere Aminodicarbonsäuren, deren Salze oder deren Vorläufersubstanzen zu nennen. Besonders bevorzugt sind Polyasparaginsäuren beziehungsweise deren Salze und Derivate, von denen in der deutschen Patentanmeldung DE-A-195 40 086 offenbart wird, dass sie neben Cobuilder-Eigenschaften auch eine bleiche-stabilisierende Wirkung aufweisen.

Weitere geeignete Buildersubstanzen sind Polyacetale, welche durch Umsetzung von Dialdehyden mit Polyolcarbonsäuren, welche 5 bis 7 C-Atome und mindestens 3 Hydroxylgruppen aufweisen, beispielsweise wie in der europäischen Patentanmeldung EP-A-0 280 223 beschrieben, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Weitere geeignete organische Buildersubstanzen sind Dextrine, beispielsweise Oligomere beziehungsweise Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500000 g/mol. Dabei ist ein Polysaccharid mit einem Dextrose-Äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch so genannte Gelbdextrine und Weißdextrine mit höheren Molmassen im Bereich von 2000 bis 30000 g/mol. Ein bevorzugtes Dextrin ist in der britischen Patentanmeldung 94 19 091 beschrieben. Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren. Derartige oxidierte Dextrine und Verfahren ihrer Herstellung sind beispielsweise aus den europäischen Patentanmeldungen EP-A-0 232 202, EP-A-0 427 349, EP-A-0 472 042 und EP-A-0 542 496 sowie den internationalen Patentanmeldungen WO 92/18542, WO-A-93/08251, WO-A-93/161 10, WO-A-94/28030, WO-A-95/07303, WO-A-95/12619 und WO-A- 95/20608 bekannt. Ebenfalls geeignet ist ein oxidiertes Oligosaccharid gemäß der deutschen Patentanmeldung DE-A-196 00 018. Ein an C6 des Saccharidrings oxidiertes Produkt kann besonders vorteilhaft sein.

Auch Oxydisuccinate und andere Derivate von Disuccinaten, vorzugsweise Ethylendiamindisuccinat, sind weitere geeignete Cobuilder. Dabei wird Ethylendiamin-N,N'-disuccinat (EDDS), dessen Synthese beispielsweise in US 3 158 615 beschrieben wird, bevorzugt in Form seiner Natrium- oder Magnesiumsalze verwendet. Weiterhin bevorzugt sind in diesem Zusammenhang auch Glycerindisuccinate und Glycerintrisuccinate, wie sie beispielsweise in den US-amerikanischen Patentschriften US 4 524 009, US 4 639 325, in der europäischen Patentanmeldung EP-A-0 150 930 und der japanischen Patentanmeldung JP 93/339896 beschrieben werden. Geeignete Einsatzmengen liegen in zeolithhaltigen und/oder silicathaltigen Formulierungen bei 3 bis 15 Gew.-%.

Weitere brauchbare organische Cobuilder sind beispielsweise acetylierte Hydroxycarbonsäuren beziehungsweise deren Salze, welche gegebenenfalls auch in Lactonform vorliegen können und welche mindestens 4 Kohlenstoffatome und mindestens eine Hydroxygruppe sowie maximal zwei Säuregruppen enthalten. Derartige Cobuilder werden beispielsweise in der internationalen Patentanmeldung WO-A-95/20029 beschrieben.

Eine weitere Substanzklasse mit Cobuildereigenschaften stellen die Phosphonate dar. Dabei handelt es sich insbesondere um Hydroxyalkan- beziehungsweise Aminoalkanphosphonate. Unter den Hydroxyalkanphosphonaten ist das 1-Hydroxyethan-1 ,1 -diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z.B. als Hexanatriumsalz der EDTMP beziehungsweise als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schwermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden. Darüber hinaus können alle Verbindungen, die in der Lage sind, Komplexe mit Erdalkaliionen auszubilden, als Cobuilder eingesetzt werden.

Ein bevorzugt eingesetzter anorganischer Builder ist feinkristalliner, synthetischer und gebundenes Wasser enthaltender Zeolith. Der eingesetzte feinkristalline, synthetische und gebundenes Wasser enthaltende Zeolith ist vorzugsweise Zeolith A und/oder P. Geeignet sind jedoch auch Zeolith X sowie Mischungen aus A, X und/oder P, beispielsweise ein Co-Kristallisat aus den Zeolithen A und X. Der Zeolith kann als sprühgetrocknetes Pulver oder auch als ungetrocknete, von ihrer Herstellung noch feuchte, stabilisierte Suspension zum Einsatz kommen. Für den Fall, dass der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C12-C18-Fettalkoholen mit 2 bis 5 Ethylenoxidgruppen, C12-C14-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Messmethode: Coulter Counter) auf und enthalten vorzugsweise 18 bis 22 Gew.-%, insbesondere 20 bis 22 Gew.-% an gebundenem Wasser. In bevorzugten Ausführungsformen sind Zeolithe in Mengen von 10 bis 94,5 Gew.-% in dem Vorgemisch enthalten, wobei es kann besonders bevorzugt ist, wenn Zeolithe in Mengen von 20 bis 70, insbesondere 30 bis 60 Gew.-% enthalten sind.

Geeignete Teilsubstitute für Zeolithe sind Schichtsilicate natürlichen und synthetischen Ursprungs. Derartige Schichtsilicate sind beispielsweise aus den Patentanmeldungen DE-A-23 34 899, EP-A-0 026 529 und DE-A-35 26 405 bekannt. Ihre Verwendbarkeit ist nicht auf eine spezielle Zusammensetzung beziehungsweise Strukturformel beschränkt. Bevorzugt sind hier jedoch Smectite, insbesondere Bentonite. Auch kristalline, schichtförmige Natriumsilicate der allgemeinen Formel NaMSixO2x+1 yH2O wobei M Natrium oder Wasserstoff bedeutet, x eine Zahl von 1 ,9 bis 4 und y eine Zahl von 0 bis 20 ist und bevorzugte Werte für x 2, 3 oder 4 sind, eigenen sich zur Substitution von Zeolithen oder Phosphaten. Derartige kristalline Schichtsilicate werden beispielsweise in der europäischen Patentanmeldung EP-A-0 164 514 beschrieben. Bevorzugte kristalline Schichtsilicate der angegebenen Formel sind solche, in denen M für Natrium steht und x die Werte 2 oder 3 annimmt. Insbesondere sind sowohl β- als auch δ-Natriumdisilicate Na2Si2O5 yH2O bevorzugt.

Zu den bevorzugten Builder-Substanzen gehören auch amorphe Natriumsilicate mit einem Modul Na2O : SiO2 von 1:2 bis 1:3,3, vorzugsweise von 1:2 bis 1:2,8 und insbesondere von 1:2 bis 1:2,6, welche löseverzögert sind und Sekundärwascheigenschaften aufweisen. Die Löseverzögerung gegenüber herkömmlichen amorphen Natriumsilicaten kann dabei auf verschiedene Weise, beispielsweise durch Oberflächenbehandlung, Compoundierung, Kompaktierung/Verdichtung oder durch Übertrocknung hervorgerufen worden sein. Im Rahmen dieser Erfindung wird unter dem Begriff "amorph" auch "röntgenamorph" verstanden. Dies heißt, dass die Silicate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silicatpartikel bei Elektronenbeugungsexperimenten verwaschene oder sogar scharfe Beugungsmaxima liefern. Dies ist so zu interpretieren, dass die Produkte mikrokristalline Bereiche der Größe 10 bis einige Hundert nm aufweisen, wobei Werte bis max. 50 nm und insbesondere bis max. 20 nm bevorzugt sind. Derartige sogenannte röntgenamorphe Silicate, welche ebenfalls eine Löseverzögerung gegenüber den herkömmlichen Wassergläsern aufweisen, werden beispielsweise in der deutschen Patentanmeldung DE-A-44 00 024 beschrieben. Insbesondere bevorzugt sind verdichtete/kompaktierte amorphe Silicate, compoundierte amorphe Silicate und übertrocknete röntgenamorphe Silicate, wobei insbesondere die übertrockneten Silicate bevorzugt auch als Träger in den erfindungsgemäßen Granulaten vorkommen beziehungsweise als Träger in dem erfindungsgemäßen Verfahren eingesetzt werden.

Weitere geeignete anorganische Buildersubstanzen sind die Carbonate, insbesondere Natriumcarbonat.

Selbstverständlich ist auch ein Einsatz der allgemein bekannten Phosphate als Buildersubstanzen möglich, sofern ein derartiger Einsatz nicht aus ökologischen Gründen vermieden werden sollte. Geeignet sind insbesondere die Natriumsalze der Orthophosphate, der Pyrophosphate und insbesondere der Tripolyphosphate. Ihr Gehalt beträgt im Allgemeinen nicht mehr als 25 Gew.-%, vorzugsweise nicht mehr als 20 Gew.-%, jeweils bezogen auf das fertige Mittel. In einigen Fällen hat es sich gezeigt, dass insbesondere Tripolyphosphate schon in geringen Mengen bis maximal 10 Gew.-%, bezogen auf das fertige Mittel, in Kombination mit anderen Buildersubstanzen zu einer synergistischen Verbesserung des Sekundärwaschvermögens führen. Bevorzugt ist das Wasch- oder Reinigungsmittel frei von Phosphaten.

Das Wasch- oder Reinigungsmittel kann weiterhin mindestens ein Enzym enthalten. Prinzipiell sind diesbezüglich alle im Stand der Technik für diese Zwecke etablierten Enzyme einsetzbar. Vorzugsweise handelt es sich um eines oder mehrere Enzyme, die in einem Wasch- oder Reinigungsmittel eine katalytische Aktivität entfalten können, insbesondere eine Protease, Amylase, Lipase, Cellulase, Hemicellulase, Mannanase, Pektin-spaltendes Enzym, Tannase, Xylanase, Xanthanase, β-Glucosidase, Carrageenase, Perhydrolase, Oxidase, Oxidoreduktase sowie deren Gemische. Bevorzugte hydrolytische Enzyme umfassen insbesondere Proteasen, Amylasen, insbesondere α-Amylasen, Cellulasen, Lipasen, Hemicellulasen, insbesondere Pectinasen, Mannanasen, β-Glucanasen, sowie deren Gemische. Besonders bevorzugt sind Proteasen, Amylasen und/oder Lipasen sowie deren Gemische und ganz besonders bevorzugt sind Proteasen. Diese Enzyme sind im Prinzip natürlichen Ursprungs; ausgehend von den natürlichen Molekülen stehen für den Einsatz in Wasch- oder Reinigungsmitteln verbesserte Varianten zur Verfügung, die entsprechend bevorzugt eingesetzt werden.

Die einzusetzenden Enzyme können ferner zusammen mit Begleitstoffen, etwa aus der Fermentation, oder mit Stabilisatoren konfektioniert sein.

Als Bleichmittel können alle Stoffe dienen, die durch Oxidation, Reduktion oder Adsorption Farbstoffe zerstören beziehungsweise aufnehmen und dadurch Materialien entfärben. Dazu gehören unter anderem hypohalogenithaltige Bleichmittel, Wasserstoffperoxid, Perborat, Percarbonat, Peroxoessigsäure, Diperoxoazelainsäure, Diperoxododecandisäure und oxidative Enzymsysteme. Neben den genannten Bestandteilen können die erfindungsgemäßen Wasch- oder Reinigungsmittel zusätzlich einen oder mehrere der oben zusätzlich genannten Stoffe enthalten, insbesondere solche aus den Gruppen der Bleichaktivatoren, pH-Stellmittel, Parfüme, Parfümträger, Fluoreszenzmittel, Farbstoffe, Silikonöle, Antiredepositionsmittel, optischen Aufheller, Vergrauungsinhibitoren und Farbübertragungsinhibitoren. Geeignete Mittel sind im Stand der Technik bekannt.

Diese Aufzählung von Wasch- oder Reinigungsmittelinhaltsstoffen ist keineswegs abschließend, sondern gibt lediglich die wesentlichsten typischen Inhaltsstoffe derartiger Mittel wieder.

In den beschriebenen Wasch- oder Reinigungsverfahren, insbesondere Waschverfahren, werden in verschiedenen Ausführungsformen der Erfindung Temperaturen von bis zu 95 °C oder weniger, 90 °C oder weniger, 60°C oder weniger, 50°C oder weniger, 40 °C oder weniger, 30°C oder weniger oder 20°C oder weniger, eingesetzt. Diese Temperaturangaben beziehen sich auf die in den Wasch- oder Reinigungsschritten eingesetzten Temperaturen.

In einer bevorzugten Ausführungsform umfasst das erfindungsgemäße Verfahren daher auch den Schritt, dass ein oder mehrere Hilfsstoffe in den tensidhaltigen Flüssigkeitsstrom dosiert werden. Diese Hilfsstoffe können vor oder nach der Dosierung der Farbstofflösung in den tensidhaltigen Flüssigkeitsstrom dosiert werden. Vorzugsweise werden der oder die Hilfsstoffe vor der Farbstofflösung in den tensidhaltigen Flüssigkeitsstrom dosiert, sodass die Farbstofflösung möglichst spät bezogen auf das gesamte Herstellungsverfahren in den tensidhaltigen Flüssigkeitsstrom dosiert wird. Dies hat den Vorteil, dass nur ein möglichst geringer Teil der Anlage mit dem Farbstoff in Kontakt kommt. Ist ein Wechsel der Farbgebung gewünscht, so muss nur ein geringer Teil der Anlage gereinigt werden.

Erfindungsgemäß ist es selbstverständlich möglich, dass ein Teil der Hilfsstoffe vor der Farbstofflösung und ein Teil der Hilfsstoffe, wie insbesondere Enzyme oder Duftstoffe, nach der Farbstofflösung dosiert werden.

In den nachfolgenden Ausführungsbeispielen wird die vorliegende Erfindung in nichtlimitierender Weise erläutert.

### Ausführungsbeispiel 1:

Es wurde eine Mischung aus den beiden Farbstoffen Liquitint^{®} violet 129 und Liquitint^{®} Pink PV der Fa. Milliken Chemical, Spartanburg, SC, USA hergestellt. Dabei wurden die Farbstoffe zuerst im Wasser gelöst.

### Zusammensetzung:

| | |
|---|---|
| Liquitint^{®} Violet 129 | 7,63 % |
| Liquitint^{®} Pink PV | 1,1 % |
| Wasser | 9,13 % |
| 1,2-Propandiol | 82,14 % |

Die erhaltene Mischung wurde einem Masterbatch bestehend aus Tensiden, zugesetzt. Nach Postaddition der restlichen Inhaltsstoffe wurde ein magentafarbenes, spezifikationsgerechtes Endprodukt erhalten.

### Ausführungsbeispiel 2:

Es wurde eine Mischung aus den beiden Farbstoffen Liquitint^{®} Cyan 15 der Fa. Milliken Chemical und Sanolin Tartrazin X90 der F. Clariant, Frankfurt, Deutschland, für ein grünfarbenes Endprodukt hergestellt. Dabei wurden die Farbstoffe zuerst im Wasser gelöst.

### Zusammensetzung:

| | |
|---|---|
| Liquitint^{®} Cyan 15 | 2,11 % |
| Sanolin tartrazin X90 | 0,67 % |
| Wasser | 9,72 % |
| 1,2-Propandiol | 87,5 % |

Die erhaltene Mischung wurde einem Masterbatch bestehend aus Tensiden und weiteren Aktiv- und Hilfsstoffen u.a. aus der Gruppe der Lösungsmittel, optischen Aufheller und Komplexbildner zugesetzt. Nach der Postaddition der restlichen Inhaltsstoffe wurde ein, spezifikationsgerechtes Endprodukt erhalten.

Die Farbstoffmischung erwies sich in einem mikrobiellen Belastungstest als stabil. Ein Zusatz von Konservierungsmittel war nicht notwendig.

## Patentansprüche

1. Kontinuierliches Verfahren zur Herstellung eines flüssigen Wasch- oder Reinigungsmittels umfassend wenigstens ein Tensid sowie wenigstens einen Farbstoff, wobei das Verfahren die folgenden Schritte umfasst:
a) Bereitstellen einer konservierungsmittelfreien Farbstofflösung, wobei der Farbstoff zunächst in Wasser gelöst wird und diese Vormischung anschließend in wenigstens einem nichtwässrigen, organischen Lösungsmittel verdünnt wird, wobei der Gehalt des organischen Lösungsmittels wenigstens 70 Gew.-%, bezogen auf das Gesamtgewicht der Farbstofflösung beträgt,
b) Dosieren der so erhaltenen Farbstofflösung in einen tensidhaltigen Flüssigkeitsstrom.

2. Verfahren nach Anspruch 1, weiterhin umfassend
c) Vermischen der Farbstofflösung mit dem tensidhaltigen Flüssigkeitsstrom mittels dynamischem oder statischem Mischer.

3. Verfahren nach Anspruch 1 oder 2, **dadurch gekennzeichnet, dass** der Farbstoff ausgewählt ist aus der Gruppe der wasserlöslichen Polymerfarbstoffe.

4. Verfahren nach einem der Ansprüche 1 bis 3, **dadurch gekennzeichnet, dass** die Konzentration des Farbstoffs in der wässrigen Vormischung mindestens dem 400-fachen, bevorzugt mindestens dem 600-fachen, besonders bevorzugt dem 800-fachen bis 5000-fachen und insbesondere dem 900-fachen bis 2000-fachen der im Endprodukt gewünschten Farbstoffzielkonzentration entspricht.

5. Verfahren nach einem der Ansprüche 1 bis 4, **dadurch gekennzeichnet, dass** der Gehalt an organischem Lösungsmittel in der Farbstofflösung 80 Gew.-% oder mehr, insbesondere 90 Gew.-% oder mehr beträgt.

6. Verfahren nach einem der Ansprüche 1 bis 5, **dadurch gekennzeichnet, dass** weiterhin ein oder mehrere Hilfsstoffe in den tensidhaltigen Flüssigkeitsstrom dosiert werden.

7. Verfahren nach Anspruch 6, **dadurch gekennzeichnet, dass** das Dosieren des wenigstens einen Hilfsstoffs vor der oder gleichzeitig mit der Dosierung der Farbstofflösung, vorzugsweise gleichzeitig mit der Dosierung der Farbstofflösung erfolgt.

8. Verfahren nach Anspruch 6 oder 7, **dadurch gekennzeichnet, dass** der Hilfsstoff ausgewählt ist aus Enzymen, Stabilisatoren, pH-Stellmitteln, Duftstoffen, Gerüststoffen, Rheologiemodifizierern sowie Mischungen aus diesen.

## Claims

1. A continuous process for the preparation of a liquid detergent or cleaning composition comprising at least one surfactant and at least one dye, which process comprises the following steps:
a) Providing a preservative-free dye solution, wherein the dye is first dissolved in water and this premix is then diluted in at least one non-aqueous organic solvent, the content of the organic solvent being at least 70% by weight, based on the total weight of the dye solution,
b) Dosing of the dye solution thus obtained into a surfactant-containing liquid stream.

2. Process of claim 1, further comprising
c) Mixing of the dye solution with the surfactant-containing liquid stream using a dynamic or static mixer.

3. Process according to claim 1 or 2, **characterized in that** the dye is selected from the group of water-soluble polymer dyes.

4. Process according to any one of claims 1 to 3, wherein the concentration of the dye in the aqueous premix is at least 400 times, preferably at least 600 times, particularly preferably 800 to 5000 times and especially 900 to 2000 times the target dye concentration desired in the final product.

5. Process according to any one of claims 1 to 4, **characterized in that** the content of organic solvent in the dye solution is 80% by weight or more, in particular 90% by weight or more.

6. Process according to any one of claims 1 to 5, **characterized in that** further one or more auxiliary substances are metered into the surfactant-containing liquid stream.

7. Process according to claim 6, **characterized in that** the dosing of the at least one auxiliary takes place before or simultaneously with the dosing of the dye solution, preferably simultaneously with the dosing of the dye solution.

8. Process according to claim 6 or 7, **characterized in that** the auxiliary is selected from enzymes, stabilizers, pH adjusters, fragrances, builders, rheology modifiers and mixtures thereof.

## Revendications

1. Procédé continu de préparation d'un produit de lavage ou de nettoyage liquide comprenant au moins un agent tensioactif ainsi qu'au moins un colorant, le procédé comprenant les étapes suivantes :
a) Préparation d'une solution de colorant sans conservateur, dans laquelle le colorant est d'abord dissous dans de l'eau et ce prémélange est ensuite dilué dans au moins un solvant organique non aqueux, la teneur en solvant organique étant d'au moins 70 % en poids, par rapport au poids total de la solution de colorant,
b) Dosage de la solution de colorant ainsi obtenue dans un courant liquide contenant des agents tensioactifs.

2. Procédé selon la revendication 1, comprenant en outre
c) mélange de la solution de colorant avec le flux de liquide contenant le tensioactif au moyen d'un mélangeur dynamique ou statique.

3. Procédé selon la revendication 1 ou 2, **caractérisé en ce que** le colorant est choisi dans le groupe des colorants polymères hydrosolubles.

4. Procédé selon l'une des revendications 1 à 3, **caractérisé en ce que** la concentration du colorant dans le prémélange aqueux correspond à au moins 400 fois, de préférence à au moins 600 fois, de manière particulièrement préférée à 800 fois à 5000 fois et en particulier à 900 fois à 2000 fois la concentration cible de colorant souhaitée dans le produit final.

5. Procédé selon l'une des revendications 1 à 4, **caractérisé en ce que** la teneur en solvant organique dans la solution de colorant est de 80 % en poids ou plus, en particulier de 90 % en poids ou plus.

6. Procédé selon l'une quelconque des revendications 1 à 5, **caractérisé en ce que** l'on dose en outre un ou plusieurs adjuvants dans le courant liquide contenant le tensioactif.

7. Procédé selon la revendication 6, **caractérisé en ce que** le dosage de l'au moins un adjuvant est effectué avant ou en même temps que le dosage de la solution de colorant, de préférence en même temps que le dosage de la solution de colorant.

8. Procédé selon la revendication 6 ou 7, **caractérisé en ce que** l'adjuvant est choisi parmi des enzymes, des stabilisateurs, des agents de réglage du pH, des parfums, des adjuvants, des modificateurs de rhéologie ainsi que des mélanges de ceux-ci.
